# EUROPEAN PATENT SPECIFICATION

(11) **EP 0 685 172 B1**
(45) Date of publication and mention of the grant of the patent: **26.04.2000**
(21) Application number: 95108582.8
(22) Date of filing: 15.11.1993
(51) Int. Cl.: A23L 1/216, A23P 1/12

(54) **Process for making a simulated potato product**
Verfahren zur Herstellung von kartoffelähnlichem Produkt
Procédé de fabrication d'un produit imitant la pomme de terre

(30) Priority: 20.11.1992 GB 9224438
(43) Date of publication of application: 06.12.1995
(62) Divisional of application: 93309123.3
(73) Proprietor: UNILEVER PLC, London EC4P 4BQ (GB); UNILEVER N.V., 3013 AL Rotterdam (NL)
(72) Inventor: Bamford, Sarah Jane, Great Yarmouth, Norfolk, NR31 9RW (GB)
(74) Representative: Kirsch, Susan Edith

(56) References cited:
- GB-A- 1 439 233
- GB-A- 1 509 722

## Description

### FIELD OF THE INVENTION

This invention relates to food products, in particular those comprising potato. When preparing potato products intended for eating as a separate snack or as a component of another product, eg a ready cooked meal, a considerable degree of handling is necessary in the preparation and cooking of the potato feedstock.

### BACKGROUND TO THE INVENTION

Potatoes are a valuable source of nutrition and the amount of handling necessary to prepare them can make them uneconomic as a food product prepared for large scale production. The present invention provides a process for the preparation of a potato product suitable for such production. The product resembles, ie simulates, slices of a potato vegetable which has been subjected to a cooking stage, eg baking, and then sliced.

### GENERAL DESCRIPTION OF THE INVENTION

According to the present invention there is provided a method of preparing a sliced potato product comprising coextruding a core composition containing at least 80% by weight of potato mash within a shell of a potato composition containing at least 70% by weight of potato mash without addition of water. Preferably the core composition comprises above 90% by weight of potato mash and the shell composition comprises at least 80% by weight of potato mash.

The separate compositions may include suitable colouring and/or seasoning materials to make the composite slice more comparable to the natural product. Additionally, the colouring/seasoning can provide a distinct product having a specific flavour. In order to provide the appearance of a peripheral skin the shell will show, in section, about 15% to about 25% preferably to about 22% of the area of the total slice. However this upper limit could be increased to give a more distinctive skin, if a specific product design required it. Potato mash is formed by boiling potatoes and mashing them to form a product which is deformable but retains its shape. The shell, ie skin, being formulated from potato mash, adheres to the core and remains intact during production and packing.

Additionally, the extrusion may be performed using shaped sections in the extrusion nozzle which give a section other than that associated with a sliced vegetable. Thus, the outer surface of the nozzle may be given a corrugated effect to provide an outer shell, ie the baked potato skin, of varying thickness. Such variations can imitate those decorations which would be applied by a cook in the preparation of a meal. These variations would be particularly useful if the slice was intended as a snack produce for consumption as a separate foodstuff. The slices will usually be made at an angle of 90° to the axis of extrusion, however other angles may be chosen to provide elongate slices. The separate slices will have a consistency of section derived from the extrusion process. The shell will preferably contain a flour to provide a dough consistency. Usually this flour will be present in the range of about 1% to about 5% by wt.

### Literature

EPA 0402178 (Unilever) describes an extruded vegetable product, especially made from potato, in folded or convoluted form.

US 4167588 (Willard) and GB 1 509 722 (Willard) describe the fabrication of a whole baked potato from potato mash and a skin prepared from baked potato pieces. The objective of these Willard disclosures is to simulate a complete baked potato both for appearance and taste. These disclosures teach that the outer "skin" layer of the potato product must have a higher solids content than the core.

### SPECIFIC DESCRIPTION OF THE INVENTION

An example of the process and product of the invention will now be given with reference to the accompanying diagrammatic drawings in which:
Figure 1 is an axial section through a co-extrusion device;
Figure 2 is an enlarged view in the direction I-I of Fig. 1.

The co-extrusion apparatus comprises a barrel 1 having a cylinder 2 positioned co-axially within it to form a peripheral annulus 4. A potato composition is introduced into the annulus through the input port 6 and a mash composition into the central core volume 3 through port 5. The apparatus includes a flow control valve 7 to vary the flow of mash from port 5 into core 3. The paths of the two inputs are shown hatched for clarity.

One formulation for the core and the periphery were prepared:

| Core formulation | |
|---|---|
| Ingredient | wt% |
| potato mash | 92.20 |
| rice flour | 3.53 |
| potato granules | 3.35 |
| salt | 0.78 |
| Celacol* | 0.10 |
| ascorbic acid | 0.04 |
| Total | 100.00 |

| Edge (skin) formulation | |
|---|---|
| potato mash | 79.144 |
| water | none added |
| seasoning | 10.01 |
| rusk | 2.40 |
| rice flour | 3.03 |
| potato granules | 2.876 |
| poppy seeds | 1.20 |
| salt | 0.75 |
| starch | 0.3 |
| Celacol* | 0.166 |
| ascorbic acid | 0.034 |
| Total | 100.00 |

| | |
|---|---|
| * Celacol is hydroxypropylmethylcellulose obtainable from Courtaulds Ltd of England. | |

These formulations, ie Core + Shell, were co-extruded at a temperature of 10°C in a weight ratio of shell:core in the range from about 15:85 to about 25:75 and preferably to about 22:78 to give an extruded product comprising a central core with a shell.

The extrusion apparatus had input port 6 at 45° so the two streams came together separated by only 45°. This port 6 also had a valve to control the flow of outer shell material. Additionally the co-axial barrel 1 and cylinder 2 were constructed to have the sectional profile of the desired product along the whole of their length.

When sliced across the extrusion axis at 90° and fried, slices of a potato product resembling baked potato was obtained. The shell could be visually distinguished from the core after subjecting the slices to frying.

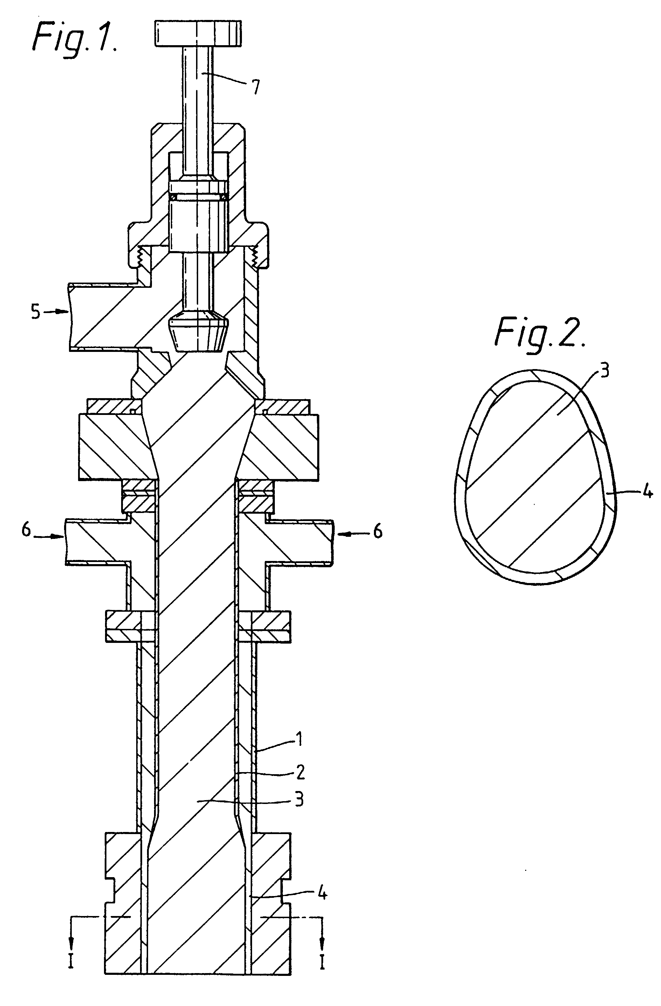

From Figure 2 it is seen the section of the extrusion nozzle, and thus the slice section, is not circular but approximates the section of a natural vegetable. Other sections, eg square and hexagonal, can be used to provide a novelty product.

The product according to the invention thus simulates a slice of a baked potato at least in appearance.

## Claims

1. A method of preparing a sliced potato product comprising coextruding a core composition containing at least 80% by weight of potato mash within a shell of a potato composition containing at least 70% by weight of potato mash without addition of water, the potato mash in each case being obtained by boiling potatoes and mashing them.

2. A method according to claim 1 wherein the core composition comprises above 90% by weight of potato mash.

3. A method according to claim 1 or claim 2 wherein the shell composition comprises at least 80% by weight of potato mash.

4. A method according to any preceding claim wherein the weight ratio of the shell:core is in the range of from 15:85 to 25:75.

5. A method according to any preceding claim wherein the weight ratio of the shell:core is up to 22:78.

6. A method according to any preceding claim wherein the shell contains flour.

## Patentansprüche

1. Verfahren zur Herstellung eines Kartoffelscheibenprodukts, bei welchem eine Kernzusammensetzung, die mindestens 80 Gew.-% Kartoffelbrei enthält, innerhalb einer Schale aus einer Kartoffelzusammensetzung, die mindestens 70 Gew.% Kartoffelbrei ohne Zugabe von Wasser enthält, zusammen mit dieser extrudiert wird, wobei der Kartoffelbrei in beiden Fällen durch Kochen der Kartoffel und Pürieren derselben erhalten wird.

2. Verfahren nach Anspruch 1, wobei die Kernzusammensetzung mehr als 90 Gew.-% Kartoffelbrei aufweist.

3. Verfahren nach Anspruch 1 oder 2, wobei die Schalenzusammensetzung mindestens 80 Gew.-% Kartoffelbrei aufweist.

4. Verfahren nach einem vorhergehenden Anspruch, wobei das Gewichtsverhältnis Schale:Kern im Bereich von 15:85 bis 25:75 liegt.

5. Verfahren nach einem vorhergehenden Anspruch, wobei das Gewichtsverhältnis Schale:Kern bis zu 22:78 ist.

6. Verfahren nach einem vorhergehenden Anspruch, wobei die Schale Mehl enthält.

## Revendications

1. Un procédé de préparation d'une produit de pomme de terre en tanches comprenant les étapes consistant à co-extruder une composition centrale contenant au moins 80 % en masse de purée de pomme de terre à l'intérieur d'une coque composée d'une composition de purée contenant au moins 70 % en masse de purée de pomme de terre sans adjonction d'eau, la purée de pomme de terre étant dans les deux cas obtenue en faisant bouillir des pommes de terre et en les écrasant.

2. Un procédé selon la revendication 1, dans lequel la composition centrale contient au moins 90 % en masse de purée de pomme de terre.

3. Un procédé selon la revendication 1 ou la revendication 2, dans lequel la composition de coque contient au moins 80 % en masse de purée de pomme de terre.

4. Un procédé selon l'une des revendications précédentes, dans lequel le rapport en masse entre la coque et la partie centrale est compris dans la gamme allant de 15 pour 85 à 22 pour 75.

5. Un procédé selon l'une des revendications précédentes, dans lequel le rapport en masse entre la coque et la partie centrale va jusqu'à 22 pour 78.

6. Un procédé selon l'une des revendications précédentes dans lequel la coque contient de la farine.
